# EUROPÄISCHE PATENTSCHRIFT

(11) **EP 2 993 305 B1**
(45) Veröffentlichungstag und Bekanntmachung des Hinweises auf die Patenterteilung: **10.07.2019**
(21) Anmeldenummer: 15182031.3
(22) Anmeldetag: 21.08.2015
(51) Int. Cl.: F01D 25/28, F01D 5/12, F01D 9/02, F02C 7/04, F01D 5/32, F01D 5/30, F01D 5/02, F01D 11/00

(54) **GASTURBINE**
GAS TURBINE
TURBINE A GAZ

(30) Priorität: 08.09.2014 DE 102014217887
(43) Veröffentlichungstag der Anmeldung: 09.03.2016
(73) Patentinhaber: Rolls-Royce Deutschland Ltd & Co KG, 15827 Blankenfelde-Mahlow (DE)
(72) Erfinder: Schreiber, Karl, 15827 Dahlewitz (DE); Duó, Pierangelo, 15827 Dahlewitz (DE)

(56) Entgegenhaltungen:
- EP-A2- 2 028 375
- WO-A1-2014/105668
- FR-A1- 2 918 409
- FR-A1- 2 988 426
- US-A- 5 067 877

## Beschreibung

Die Erfindung bezieht sich auf Füllelemente eines Fans einer Gasturbine und insbesondere auf eine Fluggasturbine gemäß den Merkmalen des Oberbegriffs des Anspruches 1.

Im Einzelnen bezieht sich die Erfindung auf eine Fluggasturbine mit einer Fan-Scheibe, an welcher um den Umfang verteilt, zueinander einen Zwischenraum bildendende Fan-Schaufeln befestigt sind, mit einer rückseitig zu der Fan-Scheibe angeordneten Dichtscheibe und mit einem an der Vorderseite der Fan-Scheibe gelagerten Einlaufkonus sowie mit in den Zwischenräumen angeordneten Füllelementen.

Zum Stand der Technik wird auf die GB 2 363 170 A verwiesen. Der Stand der Technik zeigt Konstruktionen, bei welchen das Füllelement (annulus filler) ein separat hergestelltes Bauteil ist, welches üblicherweise aus Aluminium hergestellt wird und mittels Haken an der Fan-Scheibe eingehängt ist. Das Füllelement hat die Aufgabe, die radial innenliegende Wandung des Strömungskanals in den Zwischenräumen zwischen den Fan-Schaufeln zu bilden und einen ungestörten Strömungsfluss zu ermöglichen. Dabei müssen die Füllelemente insbesondere den mechanischen Anforderungen, beispielsweise den Fliehkräften genügen. Die Herstellung der Füllelemente ist, bedingt durch ihren konstruktiven Aufbau, kostenintensiv. Weiterhin haben die Füllelemente ein relativ großes Gewicht. Die Abdichtung erfolgt mittels organischen Dichtlippen, welche ebenfalls separat gefertigt werden müssen. Durch die Einhängung mittels Haken an der Fan-Scheibe ist es erforderlich, aufwendige Herstellungsschritte an der Fan-Scheibe selbst durchzuführen. Insbesondere wenn diese als Schmiedeteil gefertigt wird, ergibt sich zunächst ein erheblich größeres Gewicht der Fan-Scheibe, welche nachfolgend spanend bearbeitet werden muss, um die Hakenbereiche herzustellen. Insgesamt ergeben sich somit Bauelemente, welche sehr kostenintensiv sind und ein hohes Gewicht mit sich bringen. Dokument EP2028375 offenbart eine Fluggasturbine mit einer Fan-Scheibe, an welcher um den Umfang verteilt, zueinander einen Zwischenraum bildende Fan-Schaufeln befestigt sind.

Der Erfindung liegt die Aufgabe zugrunde, einen Fan einer Fluggasturbine zu schaffen, welcher bei einfachem Aufbau und einfacher, kostengünstiger Herstellbarkeit die Nachteile des Standes der Technik vermeidet und mit optimierten Füllelementen versehen ist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der Einlaufkonus einstückig mit diesem ausgebildete streifenförmige Ansätze aufweist, welche in die Zwischenräume zwischen den Fanschaufeln einbringbar sind. Die freien Enden der streifenförmigen Ansätze sind in eine an der Dichtscheibe ausgebildete Ringnut eingesteckt oder unter einem umlaufenden, ringförmigen Vorsprung der Dichtscheibe eingehängt. Auf jedem der streifenförmigen Ansätze ist erfindungsgemäß ein Füllelement angeordnet und mit diesem verbunden.

Durch die erfindungsgemäße Konstruktion erfolgt eine Lagerung der Füllelemente nicht mehr, wie beim Stand der Technik, an der Fan-Scheibe, so dass diese mit keinen Haltemitteln oder ähnlichem versehen werden muss. Hierdurch reduziert sich das Gewicht der Fan-Scheibe erheblich. Die Gewichtsreduzierung kann bis zu 10 kg betragen. Zudem sind die Herstellungskosten für die Fan-Scheibe erheblich reduziert.

Zur rückseitigen (bezogen auf die Strömungsrichtung) Lagerung der Ansätze ist es erfindungsgemäß lediglich erforderlich, in die Dichtscheibe z. B. eine Ringnut einzubringen. Dies kann bei der in jedem Falle erforderlichen mechanischen Bearbeitung der Dichtscheibe erfolgen, ohne dass zusätzliche aufwendige Maßnahmen erforderlich wären. Die Einbringung der Ringnut in die Dichtscheibe bringt kein zusätzliches Gewicht mit sich. Die vorderseitige Lagerung der Füllelemente kann mittels des Einlaufkonus erfolgen, ohne dass dieser konstruktiv wesentlich verändert werden muss. Auch dies trägt zu einer erheblichen Kostenreduzierung bei.

Die Füllelemente sind bevorzugterweise als faserverstärkte Kunststoffspritzteile oder als Formgussteile ausgebildet. Hierdurch ist es möglich, die Füllelemente der durch die Wölbung der Fan-Schaufeln vorgegebenen aufwendigen Geometrie der Zwischenräume in einfacher Weise anzupassen. Somit ist es möglich, die Füllelemente passgenau herzustellen, so dass auf zusätzliche Abdichtungen verzichtet werden kann. Wird nicht auf die organischen Abdichtungen verzichtet, so können diese mit ins Formwerkzeug eingelegt werden und integral beim Spritzguss oder RTM oder Compression moulding verbunden werden.

Die Ansätze des Einlaufkonus werden nach der Herstellung des Einlaufkonus eingefräst. Der Einlaufkonus wird somit in üblicher Weise, beispielsweise als faserverstärktes Kunststoffteil hergestellt, so dass diesbezüglich keine Änderungen an der Grundkonstruktion des Einlaufkonus erforderlich sind. Die Füllelemente selbst werden auf den streifenförmigen Ansätzen durch Verschraubungen, durch Niete oder durch Bolzenbefestigungen gehalten oder durch Vorsprünge (durch Verwendung von Klemmflügeln). Es ist erfindungsgemäß auch möglich, diese mit den streifenförmigen Ansätzen zu verklammern oder auf andere Weise formschlüssig zu verankern. Die Füllelemente werden somit nach der Montage des Einlaufkonus montiert. Diese Montage kann auch mit einem Schnellverschluss erfolgen, um die Füllelemente im Bedarfsfall einfach austauschen zu können.

Die Ansätze sind bevorzugterweise als Biegebalken ausgebildet, um eine ausreichende Stabilität gegenüber den auftretenden Fliehkräften aufzuweisen.

Die Füllelemente können bevorzugterweise aus einem faserverstärkten Kunststoff gefertigt sein. Dabei sind sowohl Glasfasern als auch Karbonfasern verwendbar. Bei einem Spritzgussverfahren können dabei kürzere Fasern verwendet werden, während bei einem Formpressen (compression moulding) längere Verstärkungsfasern verwendet werden können. Eine weitere Variante ist die Herstellung mit Endlosfaserverstärung über das sogenannte RTM Verfahren (Resin Transfer Moulding), hierbei werden die höchsten mechanischen Festigkeiten bei vertretbaren Kosten erreicht.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine vereinfachte Schnittansicht von Füllelementen gemäß dem Stand der Technik,
- Fig. 3: eine schematische Teilansicht eines ersten Ausführungsbeispiels eines erfindungsgemäßen Einlaufkonus,
- Fig. 4: eine Ansicht, analog Fig. 3, eines weiteren Ausführungsbeispiels,
- Fig. 5, 6: perspektivische Teilansichten für Ausführungsbeispiele des Einlaufkonus mit streifenförmigen Ansätzen und schematisch dargestellten Füllelementen,
- Fig. 7: eine Schnittansicht, analog Fig. 2, eines Ausführungsbeispiels der Erfindung,
- Fig. 8, 9: eine schematische Draufsicht sowie eine Seitenansicht des Ausführungsbeispiels gemäß Fig. 7,
- Fig. 10, 11: Schnittansichten längs der Linie A-A von Fig. 8 in der Darstellung unterschiedlicher Befestigungsmöglichkeiten des Füllelements an dem Ansatz, und
- Fig. 12, 13: Ansichten weiterer Ausgestaltungsvarianten analog Fig. 7.

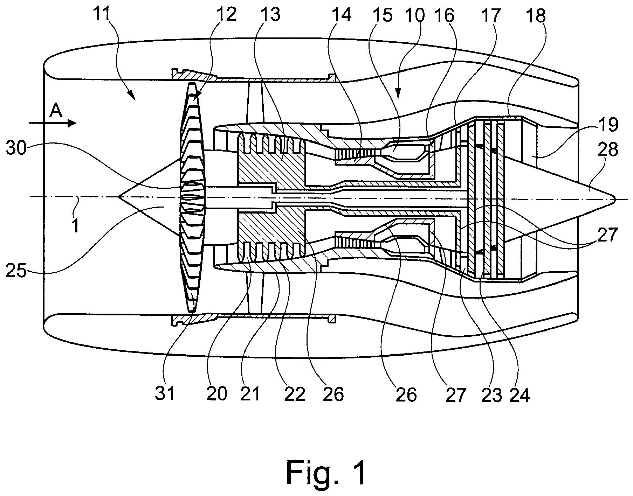

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kern-Triebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1.

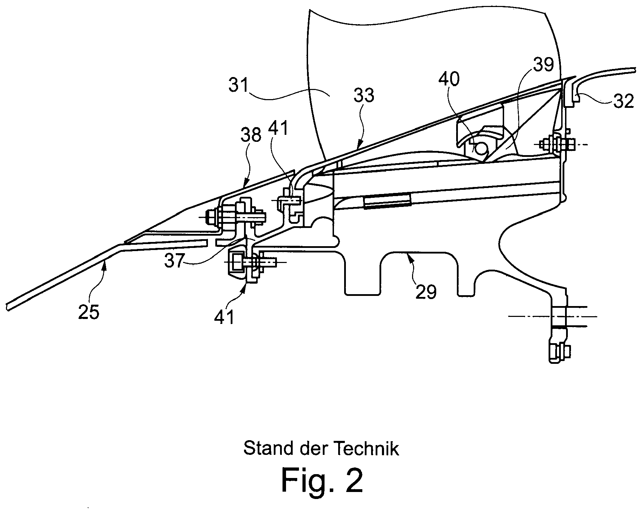

Die Fig. 2 zeigt in einer vereinfachten Axialschnitt-Ansicht ein Füllelement gemäß dem Stand der Technik sowie die Befestigung des Füllelements.

Die Fig. 2 zeigt insbesondere einen Einlaufkonus 25, welcher an einem vorderen Haltering 37 befestigt ist. Um den Befestigungsbereich abzudecken, ist eine vordere ringartige Verkleidung 38 vorgesehen.

Eine Fan-Scheibe 29 trägt um den Umfang verteilt mehrere Fan-Schaufeln, welche (s. Fig. 1) einen Zwischenraum 30 bilden. Dieser Zwischenraum 30 wird mittels Füllelementen 33 geschlossen.

Rückseitig der Fan-Scheibe 29 ist eine Dichtscheibe 32 angeordnet.

Die Fan-Scheibe 29 ist mit einer Vielzahl von um den Umfang verteilten Haken 39 versehen, in welche Befestigungshaken 40 eingesteckt sind, welche an den einzelnen Füllelementen 33 ausgebildet sind. Die Füllelemente sind beispielsweise aus Aluminium gefertigt. Der vordere Bereich der Füllelemente 33 ist mittels einer Verschraubung 41 an dem vorderen Haltering 37 befestigt, um ein Lösen der Haken 39 und der Befestigungshaken 40 zu verhindern.

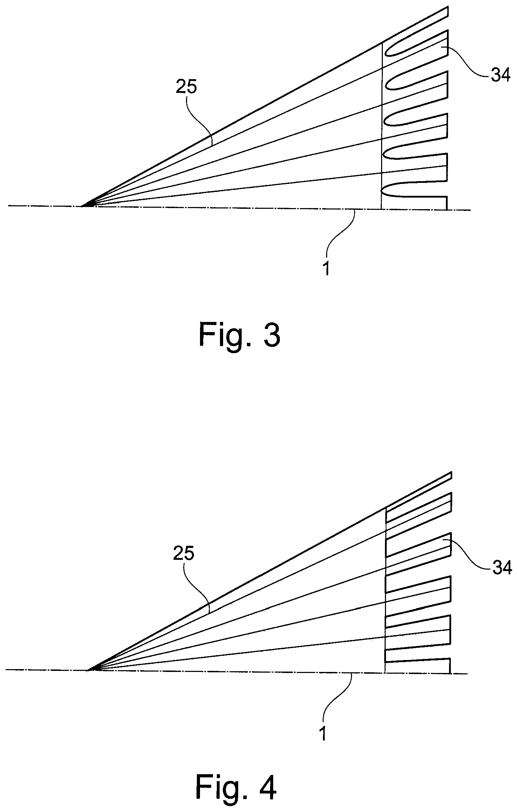

Die Fig. 3 und 4 zeigen jeweils in Seitenansicht in stark vereinfachter Darstellung einen Einlaufkonus 25, welcher an seinem hinteren (in Strömungsrichtung gesehen) Ende verlängert ausgebildet ist und gleichmäßig um den Umfang verteilt mehrere Ansätze 34 aufweist. Diese werden bevorzugterweise durch Ausfräsen hergestellt und sind so dimensioniert, dass sie in die Zwischenräume 30 des Fans 12 zwischen die Fanschaufeln 31 einsteckbar sind, wenn der Einlaufkonus 25 montiert wird. Die beiden Ausführungsbeispiele zeigen unterschiedliche Konturierungen der Ansätze 34 mit eckigen oder abgerundeten Basisbereichen.

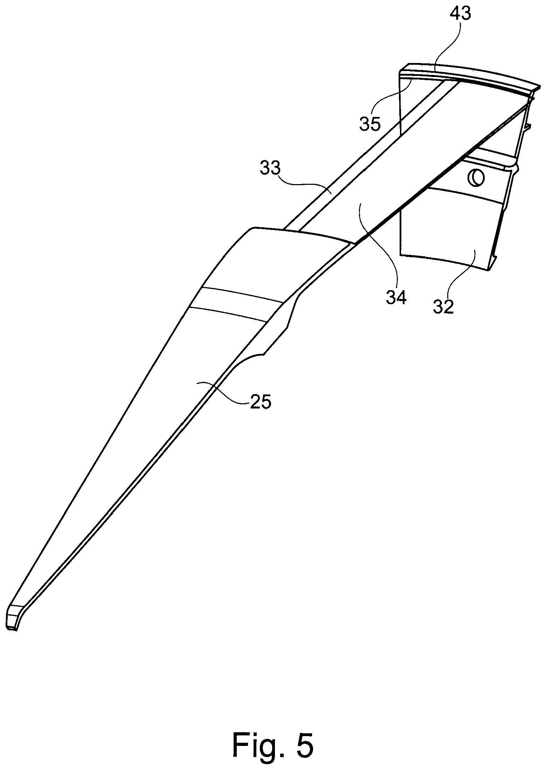

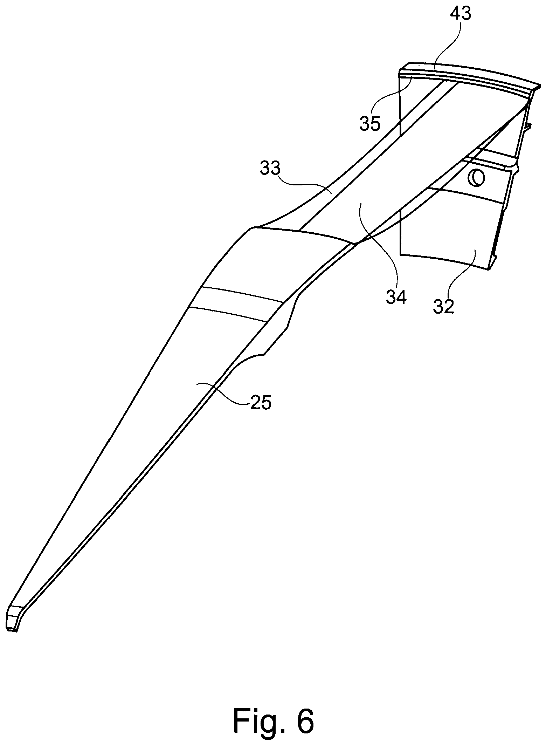

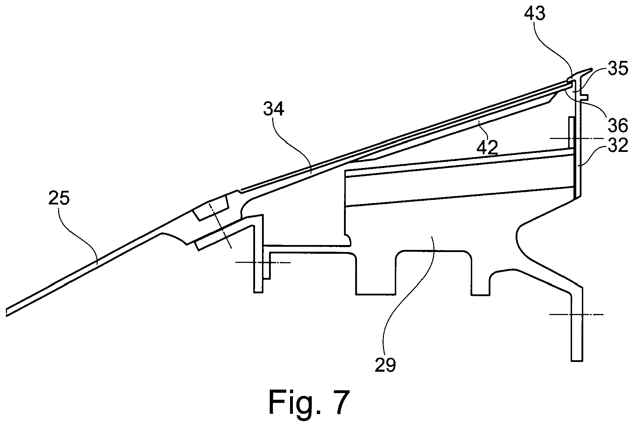

Die Fig. 5 und 6 zeigen in perspektivischer Darstellung Teile des Einlaufkonus 25 mit den Ansätzen 34, welche in eine noch im Zusammenhang mit Fig. 7 zu erläuternde Ringnut 35 einer Dichtscheibe 32 eingesteckt oder eingehängt sind.

Die Fig. 7 zeigt eine vereinfachte Schnittansicht, analog Fig. 2. Dabei ist insbesondere ersichtlich, dass die streifenförmigen Ansätze 34 einstückig mit dem Einlaufkonus 25 verbunden sind. An ihrem in Strömungsrichtung hinteren Endbereich weisen die Ansätze 34 jeweils einen Einsteckvorsprung 36 auf, welcher in eine Ringnut 35 der Dichtscheibe 32 einsteckbar oder einhängbar sind. Die Ringnut 35 kann als geschlossene oder radial offene Ringnut ausgebildet sein, im letzteren Bereich (s. Fig. 7) ist die Ringnut 35 insbesondere durch eine Ringlippe 43 gebildet.

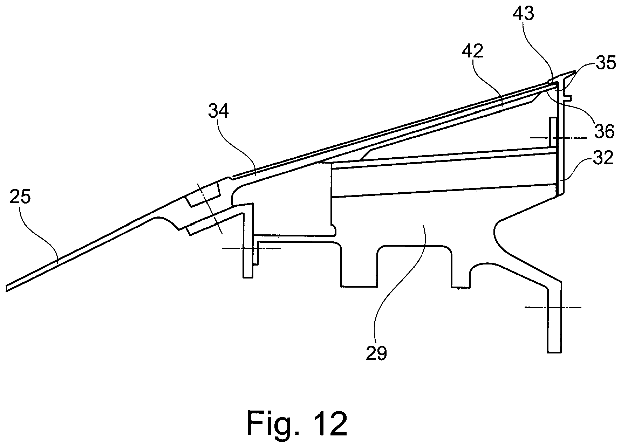

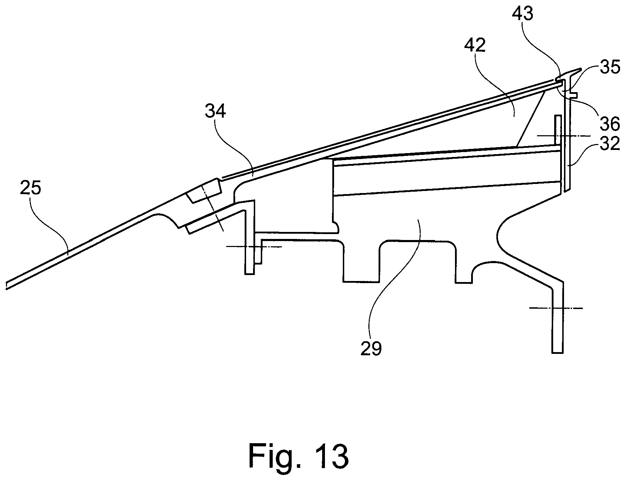

Die Fig. 7 zeigt weiterhin, dass die Ansätze 34 an ihrer Unterseite mit einem Verstärkungsbereich 42 versehen sind, welcher sich streifenförmig oder rippenförmig in Längsrichtung erstreckt. Hierzu zeigen die Fig. 12 und 13 Ausgestaltungsvarianten, bei welchen der Verstärkungsbereich 42 weiter verdickt ist, so dass er teilweise oder vollständig gegen die Fanscheibe 29 anliegt.

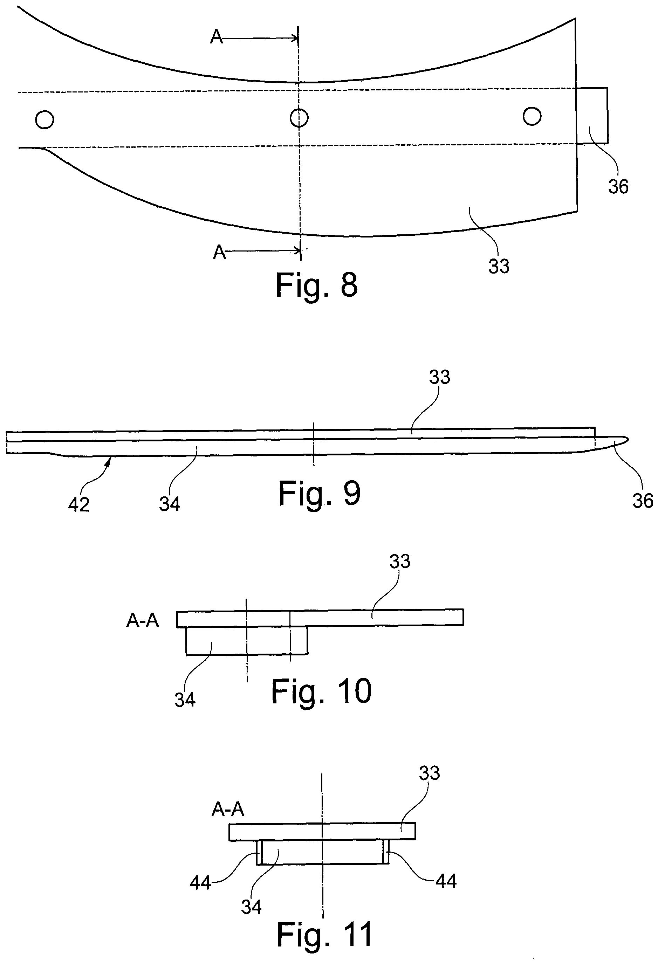

Die Fig. 10 und 11 zeigen jeweils Schnittansichten längs der Linie A-A von Fig. 8, wobei die maßliche Darstellung stark vereinfacht ist. Aus Fig. 10 ergibt sich, dass der Ansatz 34 mit dem Füllelement 33 verschraubt, vernietet oder mittels einer anderen Bolzenverbindung oder ähnlichem verbunden sein kann. Die Fig. 11 zeigt schematisch eine Darstellung, bei welcher das Füllelement 33 mittels seitlich an dem Füllelement 33 angebrachter Klammern oder Vorsprünge 44 auf den Ansatz 34 aufgesteckt und formschlüssig gehalten werden kann.

Die Figuren 12 und 13 zeigen abgewandelte Ausführungsbeispiele der Ansätze 34 und der Verstärkungsbereiche 42 analog Fig. 7. In Fig. 12 ergibt sich zwischen dem Verstärkungsbereich 42 und der Fanscheibe 29 ein geringerer Abstand, ein vorderer Teil des Verstärkungsbereichs 42 liegt an der Fanscheibe 29 an. Bei Fig. 13 liegt der Verstärkungsbereich 42 in ganzer Länge an der Fanscheibe 29 an. Hierdurch werden Beschädigungen beim Auftreffen von Teilen oder bei Vogelschlag vermieden, Verformungen des Verstärkungsbereichs werden vermindert.

Die Erfindung beschreibt somit eine Leichtbauweise der Füllelemente 33, bei der diese nicht an der Fan-Scheibe 29 befestigt sind, sondern auf den Ansätzen 34 befestigt sind. Fertigungstechnisch entfällt somit die Herstellung der Haken an der Fan-Scheibe 29. Weiterhin können sowohl die Fan-Scheibe 29 als auch die Füllelemente 33 geometrisch stark vereinfacht ausgebildet und damit gewichtsmäßig leichter und kostengünstiger hergestellt werden. Hinsichtlich der Dichtscheibe 32 sind keine oder nur geringfügige Modifikationen erforderlich, da es lediglich erforderlich ist, die Ringnut 35 bzw. die Ringlippe einzuarbeiten. Der Einlaufkonus 29 erfordert im Wesentlichen keine konstruktiven Änderungen.

Bedingt durch das geringe Gewicht der Füllelemente sind die Folgeschäden für das Gasturbinentriebwerk bei einem Versagen der Füllelemente gering. Ein weiterer Vorteil besteht darin, dass die Füllelemente nach Entfernen des Einlaufkonus in einfacher Weise ausgetauscht werden können.

### Bezugszeichenliste

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kern-Triebwerksgehäuse
- 22: Kompressorlaufschaufeln
- 23: Leitschaufeln
- 24: Turbinenrotorschaufeln
- 25: Einlaufkonus
- 26: Kompressortrommel oder -scheibe
- 27: Turbinenrotornabe
- 28: Auslasskonus
- 29: Fan-Scheibe
- 30: Zwischenraum
- 31: Fan-Schaufel
- 32: Dichtscheibe
- 33: Füllelement
- 34: Ansatz
- 35: Ringnut
- 36: Einsteckvorsprung
- 37: vorderer Haltering
- 38: vordere Verkleidung
- 39: Haken
- 40: Befestigungshaken
- 41: Verschraubung
- 42: Verstärkungsbereich
- 43: Ringlippe
- 44: Klammer

## Patentansprüche

1. Fluggasturbine mit einer Fan-Scheibe (29), an welcher um den Umfang verteilt, zueinander einen Zwischenraum (30) bildende Fan-Schaufeln (31) befestigt sind, mit einer rückseitig zur Fan-Scheibe (29) angeordneten Dichtscheibe (32) und mit einem an der Vorderseite der Fan-Scheibe (29) gelagerten Einlaufkonus (25), sowie mit in den Zwischenräumen (30) angeordneten Füllelementen (33), **dadurch gekennzeichnet, dass** der Einlaufkonus (25) einstückig mit diesem ausgebildete streifenförmige Ansätze (34) aufweist, welche in die Zwischenräume (30) einbringbar sind und deren freie Enden in eine an der Dichtscheibe (32) ausgebildete Ringnut (35) eingesteckt sind und dass auf jedem streifenförmigen Ansatz (34) ein Füllelement (33) angeordnet ist.

2. Fluggasturbine nach Anspruch 1, **dadurch gekennzeichnet, dass** die Ansätze (34) als Biegebalken ausgebildet sind.

3. Fluggasturbine nach Anspruch 1 oder 2, **dadurch gekennzeichnet, dass** die Ansätze (34) an ihren freien Enden mit einem Einsteckvorsprung (36) zum Einstecken in die Ringnut (35) versehen sind.

4. Fluggasturbine nach einem der Ansprüche 1 bis 3, **dadurch gekennzeichnet, dass** das Füllelement (33) mit dem Ansatz (34) formschlüssig verbunden ist.

5. Fluggasturbine nach Anspruch 4, **dadurch gekennzeichnet, dass** das Füllelement (33) mit dem Ansatz (34) mittels Bolzen, Niete oder Schrauben verbunden ist.

6. Fluggasturbine nach Anspruch 4, **dadurch gekennzeichnet, dass** das Füllelement (33) mit dem Ansatz (34) verklemmt oder auf dem Ansatz (34) aufgeschoben ist.

7. Fluggasturbine nach einem der Ansprüche 1 bis 6, **dadurch gekennzeichnet, dass** das Füllelement (33) als Kunststoffspritzteil ausgebildet ist.

8. Fluggasturbine nach einem der Ansprüche 1 bis 7, **dadurch gekennzeichnet, dass** der Ansatz (34) an seiner Unterseite mit zumindest einem Verstärkungsbereich (42) versehen ist.

## Claims

1. Aero gas turbine with a fan disc (29) to which are attached, distributed around the circumference, fan blades (31) that form an interspace (30) with respect to one another, with a sealing disc (32) arranged on the rear side of the fan disc (29), and with an inlet cone (25) mounted on the front side of the fan disc (29), as well as with filler elements (33) arranged in the interspaces (30), **characterized in that** the inlet cone (25) has strip-shaped extensions (34) which are integrally formed therewith, which can be introduced into the interspaces (30), and the free ends of which are inserted into an annular groove (35) formed on the sealing disc (32), and **in that** a filler element (33) is arranged on each strip-shaped extension (34) .

2. Aero gas turbine according to Claim 1, **characterized in that** the extensions (34) are designed as flexible beams.

3. Aero gas turbine according to Claim 1 or 2, **characterized in that** the extensions (34) are provided, at their free ends, with an insertion projection (36) for insertion into the annular groove (35).

4. Aero gas turbine according to one of Claims 1 to 3, **characterized in that** the filler element (33) is connected to the extension (34) in a form-fitting manner.

5. Aero gas turbine according to Claim 4, **characterized in that** the filler element (33) is connected to the extension (34) by means of bolts, rivets or screws.

6. Aero gas turbine according to Claim 4, **characterized in that** the filler element (33) is clamped together with the extension (34) or is pushed onto the extension (34).

7. Aero gas turbine according to one of Claims 1 to 6, **characterized in that** the filler element (33) is designed as an injection-moulded plastic part.

8. Aero gas turbine according to one of Claims 1 to 7, **characterized in that** the extension (34) is provided, on its underside, with at least one reinforcing region (42).

## Revendications

1. Turbine à gaz d'avion comprenant un disque de ventilateur (29) sur lequel sont fixées des pales de ventilateur (31) réparties sur la périphérie, formant un espace intermédiaire (30) les unes avec les autres, avec un disque d'étanchéité (32) disposé du côté arrière par rapport au disque de ventilateur (29) et avec un cône d'entrée (25) supporté au niveau du côté avant du disque de ventilateur (29), ainsi qu'avec des éléments de remplissage (33) disposés dans les espaces intermédiaires (30), **caractérisée en ce que** le cône d'entrée (25) présente des pièces rapportées (34) en forme de bande, réalisées d'une seule pièce avec celui-ci, qui peuvent être introduites dans les espaces intermédiaires (30) et dont les extrémités libres sont enfichées dans une rainure annulaire (35) réalisée au niveau du disque d'étanchéité (32) et **en ce qu'**un élément de remplissage (33) est disposé sur chaque pièce rapportée (34) en forme de bande.

2. Turbine à gaz d'avion selon la revendication 1, **caractérisée en ce que** les pièces rapportées (34) sont réalisées sous forme de poutres flexibles.

3. Turbine à gaz d'avion selon la revendication 1 ou 2, **caractérisée en ce que** les pièces rapportées (34) sont pourvues au niveau de leurs extrémités libres d'une saillie d'enfichage (36) destinée à être enfichée dans la rainure annulaire (35).

4. Turbine à gaz d'avion selon l'une quelconque des revendications 1 à 3, **caractérisée en ce que** l'élément de remplissage (33) est connecté par engagement par correspondance de formes avec la pièce rapportée (34).

5. Turbine à gaz d'avion selon la revendication 4, **caractérisée en ce que** l'élément de remplissage (33) est connecté à la pièce rapportée (34) au moyen de boulons, de rivets ou de vis.

6. Turbine à gaz d'avion selon la revendication 4, **caractérisée en ce que** l'élément de remplissage (33) est emboîté avec la pièce rapportée (34) ou est poussé sur la pièce rapportée (34).

7. Turbine à gaz d'avion selon l'une quelconque des revendications 1 à 6, **caractérisée en ce que** l'élément de remplissage (33) est réalisé sous forme de pièce moulée par injection de plastique.

8. Turbine à gaz d'avion selon l'une quelconque des revendications 1 à 7, **caractérisée en ce que** la pièce rapportée (34) est pourvue au niveau de son côté inférieur d'au moins une région de renforcement (42).
